# EUROPEAN PATENT SPECIFICATION

(11) **EP 3 032 510 B1**
(45) Date of publication and mention of the grant of the patent: **10.06.2020**
(21) Application number: 14196771.1
(22) Date of filing: 08.12.2014
(51) Int. Cl.: G08B 15/00

(54) **Presence simulation based on a home entertainment system**
Anwesenheitssimulation auf Basis eines Heimunterhaltungssystems
Simulation de présence basée sur un système de divertissement domestique

(43) Date of publication of application: 15.06.2016
(73) Proprietor: Harman Becker Automotive Systems GmbH, 76307 Karlsbad (DE)
(72) Inventor: Gerdes, Thomas, 89081 Ulm (DE)
(74) Representative: Bertsch, Florian Oliver

(56) References cited:
- EP-A1- 2 431 956
- DE-A1- 2 922 687
- GB-A- 2 146 469
- GB-A- 2 202 982
- US-A- 4 544 920

## Description

### Technical Field

Various embodiments relate to a system including a home entertainment system, to a method of operating the system.

### Background

Security is a common concern today both for home owners as for business premises. From practice it is known to simulate a presence of a person to prevent burglaries. Darkened buildings during night-time hours are an attraction to potential thieves. It is known to control the lighting of a building in order to discourage intruders from seeking an unlawful entry as the light simulates occupancy. Furthermore, it is know to use more sophisticated systems detecting the presence of a person in a building, which then inform the public accordingly. However, these systems include sophisticated components and are expensive to install.

US 4,544,920 A discloses an apparatus for protecting an unoccupied building in which a tape player is started when a move is detected.

Accordingly, there is a need in the art for systems and methods which mitigate at least some of the shortcomings described above. There is in particular a need in the art for systems and methods which provide an effective presence simulation at low costs.

### Summary

According to exemplary embodiments, a system is provided as mentioned in claim 1 which comprises at least one media signal generating module and a microphone configured to pick up a noise signal of an environment in which the home entertainment system is located. The system further comprises a noise processing module configured to evaluate the noise signal picked up by the microphone. The system furthermore comprises a power control module configured to control the power provided to the at least one media signal generating module. When the noise processing unit detects a predefined noise signal event in the noise signal, the power control module is configured to provide power to the at least one media signal generating module in response to the detected predefined noise signal event and the at least one media signal generating module emits a presence media signal in response to the detected predefined noise signal event.

Home entertainment systems are widely spread and an existing home entertainment system can be used to simulate the presence of an inhabitant when the environment of the home entertainment system is monitored using a microphone connected to the home entertainment system. When a certain noise signal event such as a noise signal having a signal level over a predefined threshold or having a certain signal pattern is detected, the home entertainment system can be used to output a presence media signal in response to the detected noise signal event. The presence media signal can be a sound and/or video signal generated by one of the components of the home entertainment system, e.g. by a radio receiver, a television receiver or a media player provided in the home entertainment system. The media signal can be a multimedia signal including sound components in addition to video components, or can include one of the two components. If a television receiver is present in the home entertainment system or a media player able to playback a video signal, the presence media signal can include a video signal. Thus, it is possible to display images on a visual display and to output the corresponding audio sound in response to the detected noise signal event.

According to another aspect, a method for operating a system is provided as mentioned in claim 10, the system comprising the at least one media signal generating module, the microphone, the noise processing module and the power control module as mentioned above. The method comprises the steps of picking up the noise signal of the environment in which the home entertainment system is located by the microphone. Furthermore, the noise signal picked up by the microphone is evaluated by the noise processing module. When a predefined noise signal event is detected in the noise signal, power is provided by the power control module to the at least one media signal generating module in response to the detected predefined noise signal event and a presence media signal is emitted by the media signal generating module in response to the detected predefined noise-signal event.

The features mentioned above and features yet to be explained may not only be used in isolation or in combination as explicitly indicated, but also in other combinations. Features and embodiments of the application may be combined unless explicitly mentioned otherwise.

### Brief description of the Drawings

Various features of embodiments of the application will become more apparent when read in conjunction with the accompanying drawings.
Fig. 1 is a schematic representation of a home entertainment system which can be used to simulate a presence of a user.
Fig. 2 is a flow chart for a method carried out by the home entertainment system in order to simulate presence.
Fig. 3 is a flow chart of another method used to simulate the presence of a user.
Fig. 4 is a flow chart showing the steps when the home entertainment system is used in a comparative example not forming part of the invention as a system which emits a presence media signal at predefined time periods.

### Detailed description

In the following, embodiments of the application will be described in detail with reference to the accompanying drawings. It is to be understood that the following description of embodiments is not to be taken in a limiting sense. The drawings are to be regarded as being schematic representations, and elements illustrated in the drawings are not necessarily shown to scale. Rather, the various elements are represented such that their function and general purpose becomes apparent for a person skilled in the art. Any connection or coupling between functional blocks, devices, components, or other physical or functional units shown in the drawings or described herein after may also be implemented by an indirect connection or coupling. A coupling between components may also be established over a wireless connection. Functional blocks may be implemented in hardware, firmware, software or a combination thereof.

Hereinafter, it is disclosed how a home entertainment system can be used to simulate the presence of an inhabitant. The presence simulation will be done by switching on or off the home entertainment system automatically. It is possible to determine and adjust the action carried out by the home entertainment system. In this context, it is possible to determine which sound and/or which video signal and which sound level or parameters of the video signals should be output. The home entertainment system can be either activated by a predefined noise signal event picked up by an internal or external connected microphone. Furthermore, it is possible that the home entertainment system is activated or deactivated through a programmable timer, wherein the time can be configured to generate a randomized time schedule at which the home entertainment system should be turned on or off.

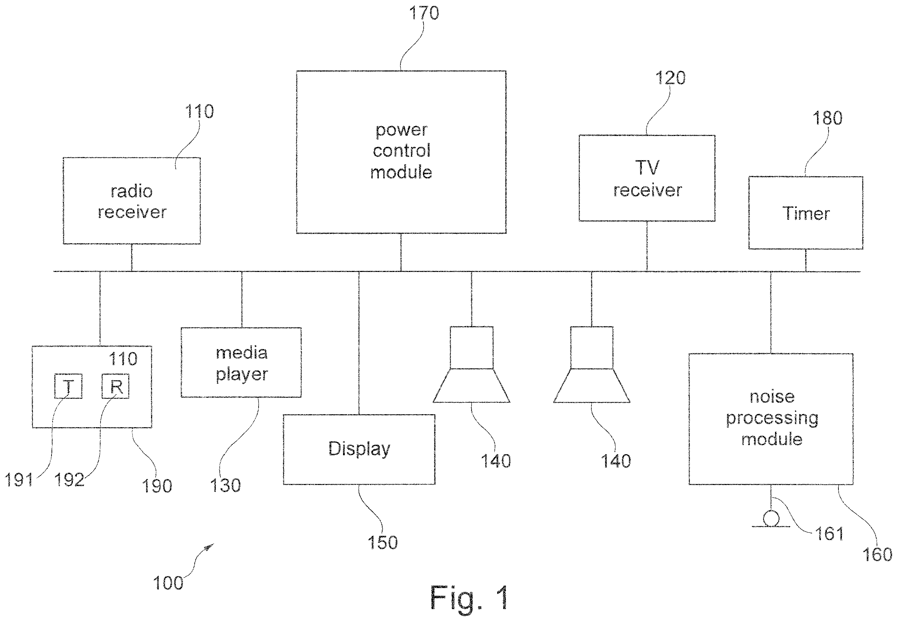

Fig. 1 shows a schematic view of such a home entertainment system 100. The home entertainment system comprises media signal generating modules such as a radio receiver 110, a television receiver 120 or a media player 130. The radio receiver 110 is configured to receive analogue and/or digital radio signals and can process them in such a way that different radio programs contained in the radio signals can be output, e.g. by loudspeaker system 140. In the embodiment shown, two loudspeakers 140 are shown. However, it should be understood that any other number of loudspeakers may be used. By way of example, the home entertainment system may have a 5.1 surround system or any other number of loudspeakers, which are able to output an audio sound. The TV receiver 120 can be configured to receive analogue or digital television signals and can be configured to process the signals in such a way that different television programs can be output, the television program comprising audio and video components. The audio components can be output using the loudspeakers 140 mentioned above, wherein the video component can be output on display 150.

A media player 130 can be provided which is configured to playback media data, e.g. a CD or DVD. Furthermore, the media player may have a storage unit (not shown) on which a plurality of media files can be stored which can comprise audio and/or video signal components. The storage unit and the media player can be a harddisk, a read-only memory, a flash memory, a random access memory, a NAS (Network Attached Storage), a Cloud memory, streaming services or any other mass storage.

Furthermore, a noise processing module is provided which evaluates a noise signal picked up by a microphone 161. The noise processing module 160 processes the received noise signal and determines whether an indication can be found in the signal that an unlawful entry into a room where the home entertainment system is located is detected. This detection can be based on a signal level meaning that if a first signal level higher than a predefined threshold is detected by the microphone 161, it is concluded that someone is present in the neighbourhood of the home entertainment system. In addition, predefined signal pattern may be used by the noise processing module stored in a memory (not shown) of the noise processing module and the detected noise signal may be compared to the predefined signal patterns in order to determine whether a noise signal event has occurred from which might be deduced that the presence simulation by the home entertainment system is necessary.

The home entertainment system furthermore comprises a power control module 170 which is configured to control the power provided to the different modules such as the radio receiver, the media player 130, the TV receiver 120 or to the different other functional components shown in Fig. 1. By way of example, when the noise processing module 160 detects a noise signal event from which it is deduced that a media signal should be output by the home entertainment system, the power control module can be informed accordingly and the power control module can provide power to one or several of the media signal generating modules such as the radio receiver 110, the media player 130 or the TV receiver 120. The home entertainment system may work in an operating mode in which all of the media signal generating modules 110, 120 or 130 are turned off or working in a stand-by mode in which they have to be woken up before they can fully operate. Only the noise processing module 160 may operate in a full operating mode in which it can process the noise signal. In another embodiment, the home entertainment system may be operating in a stand-by mode in which the home entertainment system and also the power control module is operating in a stand-by mode and can respond to a wake-up or trigger event. If this wake-up or trigger event is detected by the noise processing module 160 in the form of a certain noise signal event, the power control module can be informed accordingly and the latter can provide power to one of the media signal generating modules 110-130 and a media signal can be output by the loudspeakers 140. The wake-up signal can also wake up the noise processing module if the latter is working in a sleep or stand-by mode. If the radio receiver is used for emitting a sound signal, also called presence media signal, a radio program may be used for the audio signal output. The user may be able to determine via an input unit (not shown) which radio signals will be used for the output. When the TV receiver is selected for the output of the presence media signal a certain television program may be preselected by a user and the current television program broadcast at the time when the presence signal should be output, is selected and output via the loudspeakers 140 and via display 150. If the media player is the source for the presence signal, it can be possible to preselect a media file to be output by the home entertainment system when the output is triggered by the noise signal event. A timer 180 is provided. The timer is a programmable timer which can be programmed by a user. By way of example, it can be possible to indicate over a longer period of time such as one week, several weeks or even several months, at which time the home entertainment system should output a presence signal. It is possible that a kind of timetable is provided in which the user of the home entertainment system can indicate precisely at which date and time of the day a presence media signal should be output. Furthermore, the timer 180 may indicate when the presence media signal should be stopped. In this context, the timer can either indicate to the power control module when the power should be removed from the corresponding sound-generating module or the timer can directly indicate to the corresponding media signal generating module that the output of the presence media signal should be stopped. The user can either directly input a switch-on and a switch-off time for the different times of a day or week or month, or it is possible that only the switch-on time is indicated wherein power is removed from the corresponding media signal generating module after a predefined time period after the corresponding media signal generating module had been switched on.

Furthermore, an input/output unit 190 is provided with a transmitter 191 and a receiver 192. The input/output unit 190 is used for communication with other entities or with a wide-area network such as the internet. By way of example, the user of the home entertainment system may use an application accessible via the internet e.g. via a mobile phone in order to control the home entertainment system. The application accessible via the internet may be designed in such a way that a user can configure the home entertainment system in such a way that it can be determined at which point in time the power control module 170 supplies power to one of the media signal generating modules 110-130. Furthermore, the home entertainment system is controlled remotely in such a way that the user can determine which audio source is used for the presence media signal. By way of example, if the radio receiver is used, the user can specify which radio program should be used for the output of the presence media signal or which television program should be used or if the media player 130 is used which media file such as a CD or DVD or a media file stored on a storage unit of the media player is used for the generation of the presence media signal. The receiver 192 is used to receive the packet switched signals from the internet, whereas the transmitter 191 may be used to either send confirmation information for the presence operating parameters or any feedback to the received control commands for the home entertainment system.

It should be understood that the input/output unit 190 is also adapted to be controlled by a user directly at the home entertainment system, be it via actuating elements (not shown) provided at the home entertainment system or via a remote control communicating with the input/output unit 190.

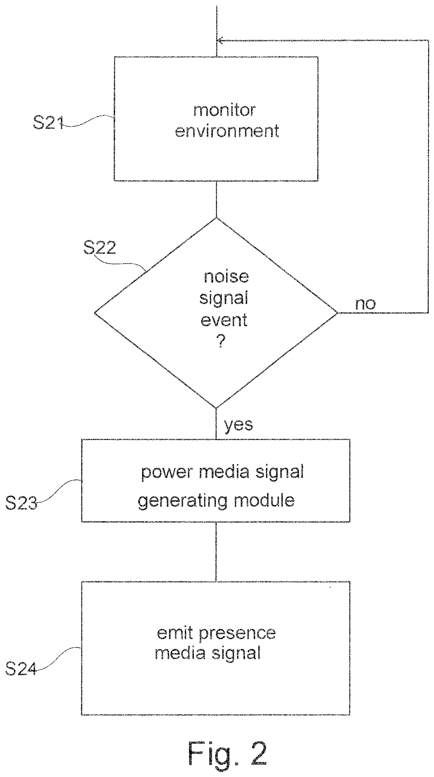

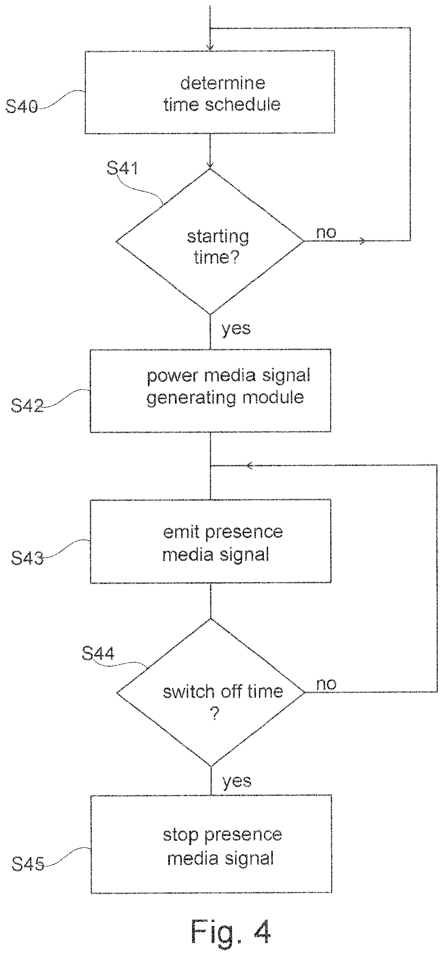

In connection with Figs. 2 and 4, different embodiments are described how the home entertainment system can be used.

Fig. 2 shows the major steps carried out for the generation of a presence media signal using the system of Fig. 1. In step S21, the environment in which the home entertainment system is located is monitored, e.g. using microphone 161 of Fig. 1. Using noise processing module 160, it is checked in step S22 whether a predefined noise signal event can be detected. This noise signal event can be a noise signal having a signal level that is higher than a predefined signal level or it can include the detection of predefined noise patterns such as the breaking of a window etc. Furthermore, the noise processing module may contain some prestored noise pattern, which should not lead to the generation of a presence media signal. These predefined patterns can include signal patterns generated by a police vehicle or ambulance with its siren going. Furthermore, the user may be able to record or register ambience noises which should not trigger the generation of a presence media signal. As the ambience noise can largely depend on the location at which the home entertainment system is located, it might be necessary to provide the noise processing module with different patterns which are considered as normal operating sounds in the environment of the home entertainment system. These noise patterns may be recorded using microphone 161 and stored in the noise processing module so that the generation of a presence media signal in response to the detection of these signal patterns is avoided.

If no predefined noise signal event as discussed above is detected, the system continues to monitor the environment. If, however, a predefined noise signal is detected in step S22, the media signal generating module can be provided with power in step S23. The different media signal generating modules, before step S23, may be operating in a sleep mode or stand-by mode or may be shut off completely, wherein only the noise-processing module may be operating in order to process and detect the predefined noise signal event. When one of the media signal generating modules such as the radio receiver 110, the television receiver 120 or the media player 130 is turned on, the latter can than generate in step S24 the desired presence media signal.

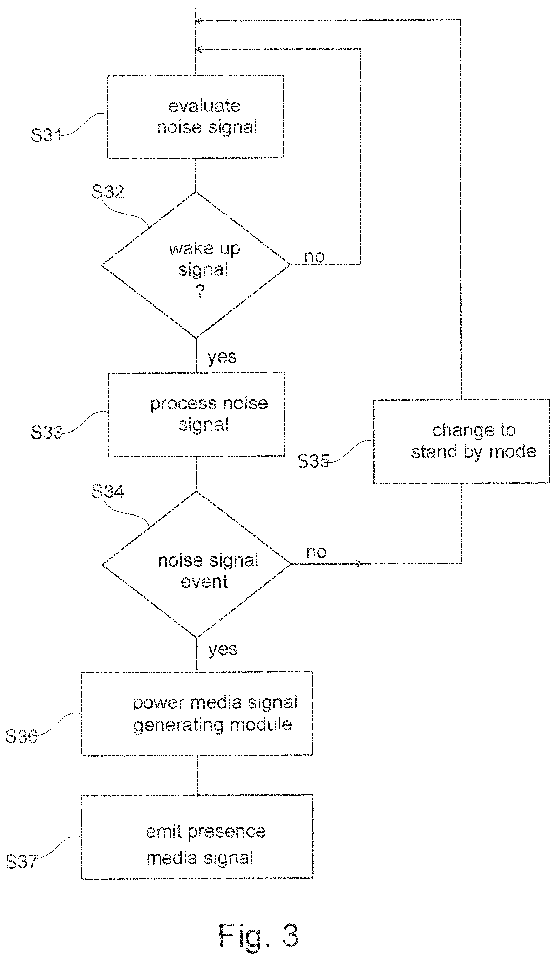

In the embodiment described in connection with Fig. 2, the noise processing module is in an operating state which directly allows the detected noise signal to be processed. As will be discussed below in connection with Fig. 3, it is also possible that the noise processing module 160 is operating in a stand-by mode which it cannot continuously process the detected noise signal. In the embodiment of Fig. 3, a kind of trigger signal is needed in order to wake the noise processing module before the noise signal is analyzed in detail in order to see whether a predefined noise signal is detected or not. In the embodiment of Fig. 3, the noise processing module is operating in a stand-by or sleep mode. In step S31, the noise processing module is nevertheless configured in such a way that it can detect a wake-up signal so that in step S31, the noise signal is at least evaluated in such a way that a wake-up signal can be detected. The wake-up signal can be a noise signal which is higher than a predefined signal level or can be the detection of a certain signal evaluation over time. In step S32, it is checked in this stand-by or sleep mode whether the wake-up signal is present in the detected noise. If this is the case, the operating mode of the noise processing module can be changed in such a way that the noise processing module is enabled to process the noise signal. The operating status may change from a stand-by or sleep mode to a fully working operating mode (step S33). In step S34, it is then determined in detail whether a predefined noise signal event is actually present in the detected noise signal or not. If this is not the case, the noise processing module may change to the stand-by mode again in step S35 and return to step S31. If, however, the predefined noise signal event is detected as was already discussed in connection with Fig. 2 in step S36, the presence media signal is output in step S37.

In the embodiment shown in Fig. 1, the microphone 161 is shown as being directly connected to the noise processing module. Such an embodiment may be advantageous when all the functional elements of Fig. 1 except the noise processing module are switched off completely. However, it should be understood that the microphone 161 needs not be directly coupled to the noise processing module. The microphone 161 may also be connected to the home entertainment system 100 using a separate functional entity which can pass the detected noise signals directly to one of the other modules without having to pass through the noise processing module 160.

In connection with Fig. 4, an example is disclosed in which the home entertainment system is not necessarily used in connection with a microphone. In this example, only the time provided by timer 180 triggers the generation of a presence media signal. By way of example, a user may have programmed the home entertainment system in such a way that at different points in time a certain presence media signal is output by home entertainment system 100 in accordance with a time schedule input to the system by a user. It is checked in step S40 at which time the emission of a presence media signal is desired. In step S41 it is then checked whether the starting time has been reached. If it is detected in step S41 that a starting time indicated by the timetable has been reached, the power control module can power the media signal generating module in step S42. After step S42, the selected media signal generating module can then emit the presence media signal in step S43 until the switch-off time is reached in step S44. As long as the switch-off time has not been reached, the presence media signal is output. Only when the event or the time period at which the output of the presence media signal should be stopped is reached, the presence media signal is stopped in step S45. The determination whether the output of the presence media signal should be stopped may include the step of determining whether the user has set a certain date or time when the output should be stopped. In another embodiment, the user may have simply determined the length of the output of the presence media signal, i.e. the length of the time period so that after this time period has lapsed, the emission of the presence media signal is stopped. In still another example, the home entertainment system includes a preset switch-off time so that each time after the presence media signal has been turned on, it is automatically switched off after a predefined time period.

From the above discussion, the following generalized conclusions can be drawn: the home entertainment system may comprise a programmable timer configured for an input of a starting time at which the at least one media signal generating module is provided with power, wherein the power control module is configured to provide power to the at least one media signal generating module at the time indicated by the timer and the media signal generating module is configured to emit the media signal at the time indicated by the timer.

The timer may be configured for an input of a switch-off time at which the media signal generating module should stop to emit the presence media signal, wherein the power control module can be configured to remove the power from the media signal generating module after the switch-off time. In another embodiment the timer is configured to indicate the predefined time period after which the power control module switches off the power at the media signal generating module, wherein the power control module is configured to remove the power from the media signal generating module at the switch-off time.

Furthermore, an interface is provided to receive packet switched signals from a wide-area network such as the internet. The packet switched signals contain control commands for the operation of the home entertainment system. The power control module is configured to provide power to the media signal generating module and to remove power from the media signal generating module in accordance with the received control commands.

In one embodiment, the noise processing module may work in a fully activated operating mode in which the noise processing module can directly process and detect the predefined noise signal event, whereas the at least one media signal generating module is working in a stand-by mode or is shut off completely. In another embodiment, however, also the noise processing module is operating in a stand-by operating mode in which the sound processing module is not configured to evaluate the noise signal but is configured to detect a wake-up signal. When the noise processing module then detects the wake-up signal, the noise processing module is configured to change into an operating mode in which it evaluates the noise signal. In this context, the noise processing module can be configured to change from the stand-by mode into the operating mode if it detects a noise signal with a signal level above a predefined signal level threshold or a signal level having a predefined signal pattern.

When the media signal generating modules comprise a television receiver, the television receiver may be configured to output a predefined television program including audio and video signals as presence media signal.

Furthermore, the noise processing module can be configured to identify non-signal events which prevent the media signal generating module emitting the presence media signal when the non-signal event is detected by the noise processing module. In the corresponding method, it is possible to store these non-signal events and when one of these non-signal events is detected, the emission of the presence media signal is disabled. This can help to accustom the home entertainment system to the environment in which it is located. By way of example, if the triggering noise signal event is the detection of a signal that is higher than a predefined signal threshold, it can be checked whether the signal pattern corresponds to one of the stored non-signal events, and if this is the case, the emission of the presence media signal is omitted even when the signal is higher than the predefined signal threshold. Summarizing, it is possible to output a presence media signal with minimum additional costs for hardware as a home entertainment system including or not a microphone is present in many apartments or buildings. This home entertainment system can be used for the generation of a presence media signal which simulates the presence of a user at the location where the home entertainment system is located.

## Claims

1. A system (100) simulating a presence of a user of a home entertainment system, the system comprising:
- the home entertainment system comprising a plurality of media signal generating modules (110-140),
a microphone (161) configured to pick up a noise signal of an environment in which the home entertainment system is located,
a noise processing module (160) configured to evaluate the noise signal picked up by the microphone,
a power control module (170) configured to control the power provided to the at least one media signal generating module (110-130),
wherein when the noise processing module (160) detects a predefined noise signal event in the noise signal the power control module (170) is configured to provide power to the at least one of the plurality of media signal generating modules (110-140) in response to the detected predefined noise signal event, and the at least one of the plurality of media signal generating modules emits a presence media signal in response to the detected predefined noise signal event, the system further comprising a receiver (192) configured to receive packet switched signals from a Wide Area Network, the packet switched signals containing control commands for the operation of the home entertainment system, wherein the power control module (170) is configured to provide power to the at least one of the plurality of media signal generating modules and to remove power from the at least one media signal generating module (110-140) in accordance with the received control commands, wherein the control commands indicate which of the at least one of the plurality of media signal generating modules should emit the presence media signal.

2. The system (100) according to claim 1, further comprising a programmable timer (180) configured for an input of a starting time at which the at least one of the plurality of media signal generating modules (110-140) is provided with power, wherein the power control module (170) is configured to provide power to the at least one of the plurality of media signal generating modules (110-140) at the time indicated by the timer (180) and the at least one of the plurality of media signal generating modules (110-140) is configured to emit the presence media signal at the time indicated by the timer.

3. The system according to claim 2, wherein the timer (180) is configured for an input of a switch off time at which the at least one of the plurality of media signal generating modules (110-140) should stop to emit the presence media signal, wherein the power control module (170) is configured to remove the power from the at least one of the plurality of media signal generating modules after the switch off time.

4. The system according to claim 2, wherein the timer (180) is configured to indicate a predefined time period after which the power control module (170) switches off the power at the at least one of the plurality of media signal generating modules (110-140), wherein the power control module is configured to remove the power from the at least one of the plurality of media signal generating modules at the switch off time.

5. The system (100) according to any of the preceding claims, wherein the noise processing module (160) is configured to operate in a stand by operating mode in which the noise processing module is not configured to evaluate the noise signal but is configured to detect a wake up signal, wherein when the noise processing module (160) detects the wake up signal it is configured to change into an operating mode in which it evaluates the noise signal in order to determine whether the predefined noise event is present in the noise signal.

6. The system (100) according to claim 5, wherein the noise processing module (160) is configured is configured to change from the stand by mode into the operating mode if it detects a noise signal with a signal level above a predefined signal level threshold or a signal level having a predefined signal pattern.

7. The system (100) according to any of the preceding claims, wherein the plurality of media signal generating modules (110-130) comprises at least one loudspeaker (140) and at least one of a radio receiver (110), a television receiver (120), and a media player (130).

8. The system (100) according to any of the preceding claims, wherein the plurality of media signal generating modules (110-140) comprises a television receiver (120), wherein the television receiver is configured to output a predefined television program including video and audio signals as presence media signal.

9. The system (100) according to any of the preceding claims, wherein the plurality of media signal generating modules (110-140) comprises a media player, wherein the media player is configured to output a predefined media file as presence media signal.

10. A method for operating a system (100) for simulating a presence of a user of a home entertainment system, the system comprising a microphone (161), a noise processing module (160), a power control module (170) and receiver receiving packet switched signals from a Wide Area Network, and a home entertainment system, which comprises a plurality of media signal generating modules (110-140), the packet switched signals containing control commands for the operation of the home entertainment system, the method comprising the steps of:
- picking up, by the microphone (161), a noise signal of an environment in which the home entertainment system is located,
- evaluating, by the noise processing module (160), the noise signal picked up by the microphone, wherein when a predefined noise signal event is detected in the noise signal, power is provided by the power control module to the at least one of the plurality of media signal generating modules in response to the detected predefined noise signal event, and a presence media signal is emitted by the at least one of the plurality of media signal generating modules in response to the detected predefined noise signal event, wherein power is provided by the power control module to the at least one of the plurality of media signal generating modules and removed from the at least one media signal generating module in accordance with the received control commands, wherein the control commands indicate which of the at least one of the plurality of media signal generating modules should emit the presence media signal.

11. The method according to claim 10 further comprising the steps of :
- detecting an input of a starting time at which the at least one of the plurality of media signal generating modules (110-140) is provided with power,
- providing the power to the at least one of the plurality of media signal generating modules (110-140) at the time indicated by the timer, and
- emitting the presence media signal at the time indicated by the timer.

12. The method according to claim 11, further comprising the steps of:
- detecting an input of a switch off time at which the at least one of the plurality of media signal generating modules should stop to emit the presence media signal, and
- automatically removing the power from the at least one media signal generating module after the switch off time.

13. The method according to any of claim 10 to 12, wherein the noise processing module (160) is operating in a stand by operating mode in which the noise processing module is not configured to evaluate the noise signal, wherein it is monitored whether a wake up signal is detected , wherein when the wake up signal is detected, the operating mode of the noise processing module is changed into an operating mode in which the noise signal is evaluated in order to determine whether the predefined noise event is present in the noise signal.

## Patentansprüche

1. System (100), das eine Anwesenheit eines Benutzers eines Heimunterhaltungssystems simuliert, wobei das System Folgendes umfasst:
- das Heimunterhaltungssystem, das eine Vielzahl von mediensignalgenerierenden Modulen (110-140) umfasst,
ein Mikrofon (161), das dazu konfiguriert ist, ein Geräuschsignal einer Umgebung aufzunehmen, in der sich das Heimunterhaltungssystem befindet,
ein Geräuschverarbeitungsmodul (160), das dazu konfiguriert ist, das Geräuschsignal, das durch das Mikrofon aufgenommen wird, zu evaluieren,
ein Energiesteuermodul (170), das dazu konfiguriert ist, die Energie zu steuern, mit der das mindestens eine mediensignalgenerierende Modul (110-130) versorgt wird, wobei, wenn das Geräuschverarbeitungsmodul (160) ein vordefiniertes Geräuschsignalereignis in dem Geräuschsignal erkennt, das Energiesteuermodul (170) dazu konfiguriert ist, das mindestens eine der Vielzahl von mediensignalgenerierenden Modulen (110-140) als Reaktion auf das erkannte vordefinierte Geräuschsignalereignis mit Energie zu versorgen, und das mindestens eine der Vielzahl von mediensignalgenerierenden Modulen als Reaktion auf das erkannte vordefinierte Geräuschsignalereignis ein Anwesenheitsmediensignal emittiert, wobei das System ferner einen Empfänger (192) umfasst, der dazu konfiguriert ist, paketvermittelte Signale von einem Weitverkehrsnetz zu empfangen, wobei die paketvermittelten Signale Steuerbefehle für den Betrieb des Heimunterhaltungssystems enthalten, wobei das Energiesteuermodul (170) dazu konfiguriert ist, gemäß den empfangenen Steuerbefehlen das mindestens eine der Vielzahl von mediensignalgenerierenden Modulen (110-140) mit Energie zu versorgen oder die Energieversorgung des mindestens einen der mediensignalgenerierenden Module zu unterbrechen, wobei die Steuerbefehle angeben, welches des mindestens einen der Vielzahl von mediensignalgenerierenden Module das Anwesenheitsmediensignal emittieren soll.

2. System (100) nach Anspruch 1, das ferner einen programmierbaren Zeitgeber (180) umfasst, der für eine Eingabe eines Startzeitpunkts konfiguriert ist, bei welchem das mindestens eine der Vielzahl von mediensignalgenerierenden Modulen (110-140) mit Energie versorgt wird, wobei das Energiesteuermodul (170) dazu konfiguriert ist, das mindestens eine der Vielzahl von mediensignalgenerierenden Modulen (110-140) zu dem Zeitpunkt mit Energie zu versorgen, der durch den Zeitgeber (180) angegeben wird, und wobei das mindestens eine der Vielzahl von mediensignalgenerierenden Modulen (110-140) dazu konfiguriert ist, das Anwesenheitsmediensignal zu dem Zeitpunkt zu emittieren, der durch den Zeitgeber angegeben wird.

3. System nach Anspruch 2, wobei der Zeitgeber (180) für eine Eingabe eines Abschaltzeitpunkts konfiguriert ist, bei welchem das mindestens eine der Vielzahl von mediensignalgenerierenden Modulen (110-140) das Emittieren des Anwesenheitsmediensignals stoppen soll, wobei das Energiesteuermodul (170) dazu konfiguriert ist, die Energieversorgung des mindestens einen der Vielzahl von mediensignalgenerierenden Modulen nach dem Abschaltzeitpunkt zu unterbrechen.

4. System nach Anspruch 2, wobei der Zeitgeber (180) dazu konfiguriert ist, eine vordefinierte Zeitperiode anzugeben, nach welcher das Energiesteuermodul (170) die Energie bei dem mindestens einen der Vielzahl von mediensignalgenerierenden Modulen (110-140) abschaltet, wobei das Energiesteuermodul dazu konfiguriert ist, die Energieversorgung des mindestens einen der Vielzahl von mediensignalgenerierenden Modulen zu dem Abschaltzeitpunkt zu unterbrechen.

5. System (100) nach einem der vorstehenden Ansprüche, wobei das Geräuschverarbeitungsmodul (160) dazu konfiguriert ist, in einem Standby-Betriebsmodus betrieben zu werden, in welchem das Geräuschverarbeitungsmodul nicht dazu konfiguriert ist, das Geräuschsignal zu evaluieren, jedoch dazu konfiguriert ist, ein Aufwachsignal zu erkennen, wobei, wenn das Geräuschverarbeitungsmodul (160) das Aufwachsignal erkennt, es dazu konfiguriert ist, in einen Betriebsmodus zu wechseln, in welchem es das Geräuschsignal evaluiert, um zu bestimmen, ob das vordefinierte Geräuschereignis in dem Geräuschsignal vorliegt.

6. System (100) nach Anspruch 5, wobei das Geräuschverarbeitungsmodul (160) dazu konfiguriert ist, aus dem Standby-Modus in den Betriebsmodus zu wechseln, wenn es ein Geräuschsignal mit einem Signalpegel über einem vordefinierten Signalpegelschwellenwert oder einem Signalpegel mit einem vordefinierten Signalmuster erkennt.

7. System (100) nach einem der vorstehenden Ansprüche, wobei die Vielzahl von mediensignalgenerierenden Modulen (110-130) mindestens einen Lautsprecher (140) und mindestens eines von einem Funkempfänger (110), einem Fernsehempfänger (120) und einer Medienwiedergabevorrichtung (130) umfasst.

8. System (100) nach einem der vorstehenden Ansprüche, wobei die Vielzahl von mediensignalgenerierenden Modulen (110-140) einen Fernsehempfänger (120) umfasst, wobei der Fernsehempfänger dazu konfiguriert ist, ein vordefiniertes Fernsehprogramm einschließlich eines Video- und eines Audiosignals als Anwesenheitsmediensignal auszugeben.

9. System (100) nach einem der vorstehenden Ansprüche, wobei die Vielzahl von mediensignalgenerierenden Modulen (110-140) eine Medienwiedergabevorrichtung umfasst, wobei die Medienwiedergabevorrichtung dazu konfiguriert ist, eine vordefinierte Mediendatei als Anwesenheitsmediensignal auszugeben.

10. Verfahren zum Betreiben eines Systems (100) zum Simulieren einer Anwesenheit eines Benutzers eines Heimunterhaltungssystems,
wobei das System ein Mikrofon (161),
ein Geräuschverarbeitungsmodul (160), ein Energiesteuermodul (170) und einen Empfänger, der paketvermittelte Signale von einem Weitverkehrsnetz empfängt, und ein Heimunterhaltungssystem, das eine Vielzahl von mediensignalgenerierenden Modulen (110-140) umfasst, umfasst, wobei die paketvermittelten Signale Steuerbefehle zum Betrieb des Heimunterhaltungssystems enthalten, wobei das Verfahren die folgenden Schritte umfasst:
- Aufnehmen, durch das Mikrofon (161), eines Geräuschsignals einer Umgebung, in der sich das Heimunterhaltungssystem befindet,
- Evaluieren, durch das Geräuschverarbeitungsmodul (160), des durch das Mikrofon aufgenommen Geräuschsignals, wobei, wenn ein vordefiniertes Geräuschsignalereignis in dem Geräuschsignal erkannt wird, das mindestens eine der Vielzahl von mediensignalgenerierenden Modulen als Reaktion auf das vordefinierte Geräuschsignalereignis durch das Energiesteuermodul mit Energie versorgt wird und das mindestens eine der Vielzahl von mediensignalgenierenden Modulen als Reaktion auf das erkannte vordefinierte Geräuschsignalereignis ein Anwesenheitsmediensignal emittiert, wobei gemäß den empfangenen Steuerbefehlen das mindestens eine der Vielzahl von mediensignalverarbeitenden Modulen durch das Energiesteuermodul mit Energie versorgt und die Energieversorgung des mindestens einen mediensignalgenerierenden Moduls unterbrochen wird, wobei die Steuerbefehle angeben, welches des mindestens einen der Vielzahl von mediensignalgenerierenden Modulen das Anwesenheitsmediensignal emittieren soll.

11. Verfahren nach Anspruch 10, das ferner die folgenden Schritte umfasst:
- Erkennen einer Eingabe eines Startzeitpunkts, bei welchem das mindestens eine der Vielzahl von mediensignalgenerierenden Modulen (110-140) mit Energie versorgt wird,
- Versorgen des mindestens einen der Vielzahl von mediensignalgenerierenden Modulen (110-140) mit Energie zu dem Zeitpunkt, der durch den Zeitgeber angegeben wird, und
- Emittieren des Anwesenheitsmediensignals zu dem Zeitpunkt, der durch den Zeitgeber angegeben wird.

12. Verfahren nach Anspruch 11, das ferner die folgenden Schritte umfasst:
- Erkennen einer Eingabe eines Abschaltzeitpunkts, bei welchem das mindestens eine der Vielzahl von mediensignalgenerierenden Modulen aufhören soll, das Anwesenheitsmediensignal zu emittieren, und
- automatisches Unterbrechen der Energieversorgung des mindestens einen mediensignalgenerierenden Moduls nach dem Abschaltzeitpunkt.

13. Verfahren nach einem der Ansprüche 10 bis 12, wobei das Geräuschverarbeitungsmodul (160) in einem Standby-Betriebsmodus betrieben wird, in welchem das Geräuschverarbeitungsmodul nicht dazu konfiguriert ist, das Geräuschsignal zu evaluieren, wobei überwacht wird, ob ein Aufwachsignal erkannt wird, wobei, wenn das Aufwachsignal erkannt wird, der Betriebsmodus des Geräuschverarbeitungsmoduls in einen Betriebsmodus wechselt, in welchem das Geräuschsignal evaluiert wird, um zu bestimmen, ob das vordefinierte Geräuschereignis in dem Geräuschsignal vorliegt.

## Revendications

1. Système (100) simulant une présence d'un utilisateur d'un système de divertissement domestique, le système comprenant :
- le système de divertissement domestique comprenant une pluralité de modules de génération de signal multimédia (110 à 140),
un microphone (161) conçu pour capter un signal de bruit d'un environnement dans lequel est situé le système de divertissement domestique,
un module de traitement de bruit (160) conçu pour évaluer le signal de bruit capté par le microphone,
un module de commande de puissance (170) conçu pour commander la puissance fournie à l'au moins un module de génération de signal multimédia (110 à 130),
dans lequel, lorsque le module de traitement de bruit (160) détecte un événement de signal de bruit prédéfini dans le signal de bruit, le module de commande de puissance (170) est conçu pour fournir de la puissance à l'au moins un de la pluralité de modules de génération de signal multimédia (110 à 140) en réponse à l'événement de signal de bruit prédéfini détecté, et l'au moins un de la pluralité de modules de génération de signal multimédia émet un signal multimédia de présence en réponse à l'événement de signal de bruit prédéfini détecté, le système comprenant en outre un récepteur (192) conçu pour recevoir des signaux à commutation de paquets depuis un réseau étendu, les signaux à commutation de paquets contenant des ordres de commande pour le fonctionnement du système de divertissement domestique, dans lequel le module de commande de puissance (170) est conçu pour fournir de la puissance à l'au moins un de la pluralité de modules de génération de signal multimédia et pour retirer de la puissance de l'au moins un module de génération de signal multimédia (110 à 140) en conformité avec les ordres de commande reçus, dans lequel les ordres de commande indiquent celui de l'au moins un de la pluralité de modules de génération de signal multimédia qui doit émettre le signal multimédia de présence.

2. Système (100) selon la revendication 1, comprenant en outre un minuteur programmable (180) conçu pour une entrée d'un moment de démarrage auquel l'au moins un de la pluralité de modules de génération de signal multimédia (110 à 140) est fourni en puissance, dans lequel le module de commande de puissance (170) est conçu pour fournir de la puissance à l'au moins un de la pluralité de modules de génération de signal multimédia (110 à 140) au moment indiqué par le minuteur (180) et l'au moins un de la pluralité de modules de génération de signal multimédia (110 à 140) est conçu pour émettre le signal multimédia de présence au moment indiqué par le minuteur.

3. Système selon la revendication 2, dans lequel le minuteur (180) est conçu pour une entrée d'un moment de mise hors tension auquel l'au moins un de la pluralité de modules de génération de signal multimédia (110 à 140) doit arrêter d'émettre le signal multimédia de présence, dans lequel le module de commande de puissance (170) est conçu pour retirer la puissance de l'au moins un de la pluralité de modules de génération de signal multimédia après le moment de mise hors tension.

4. Système selon la revendication 2, dans lequel le minuteur (180) est conçu pour indiquer une période prédéfinie après laquelle le module de commande de puissance (170) met hors tension la puissance au niveau de l'au moins un de la pluralité de modules de génération de signal multimédia (110 à 140), dans lequel le module de commande de puissance est conçu pour retirer la puissance de l'au moins un de la pluralité de modules de génération de signal multimédia au moment de mise hors tension.

5. Système (100) selon l'une quelconque des revendications précédentes, dans lequel le module de traitement de bruit (160) est conçu pour fonctionner dans un mode de fonctionnement en veille dans lequel le module de traitement de bruit n'est pas conçu pour évaluer le signal de bruit, mais est conçu pour détecter un signal de réveil, dans lequel, lorsque le module de traitement de bruit (160) détecte le signal de réveil, il est conçu pour passer dans un mode de fonctionnement dans lequel il évalue le signal de bruit afin de déterminer si l'événement de bruit prédéfini est présent dans le signal de bruit.

6. Système (100) selon la revendication 5, dans lequel le module de traitement de bruit (160) est conçu pour passer du mode veille au mode de fonctionnement s'il détecte un signal de bruit avec un niveau de signal supérieur à un seuil de niveau de signal prédéfini ou un niveau de signal ayant une configuration de signal prédéfinie.

7. Système (100) selon l'une quelconque des revendications précédentes, dans lequel la pluralité de modules de génération de signal multimédia (110 à 130) comprend au moins un haut-parleur (140) et au moins un récepteur radio (110), un récepteur de télévision (120) et un lecteur multimédia (130).

8. Système (100) selon l'une quelconque des revendications précédentes, dans lequel la pluralité de modules de génération de signal multimédia (110 à 140) comprend un récepteur de télévision (120), dans lequel le récepteur de télévision est conçu pour délivrer en sortie un programme de télévision prédéfini comportant des signaux vidéo et audio en tant que signal multimédia de présence.

9. Système (100) selon l'une quelconque des revendications précédentes, dans lequel la pluralité de modules de génération de signal multimédia (110 à 140) comprend un lecteur multimédia, dans lequel le lecteur multimédia est conçu pour délivrer en sortie un fichier multimédia prédéfini en tant que signal multimédia de présence.

10. Procédé de fonctionnement d'un système (100) destiné à simuler une présence d'un utilisateur d'un système de divertissement domestique,
le système comprenant un microphone (161),
un module de traitement de bruit (160), un module de commande de puissance (170) et un récepteur recevant des signaux à commutation de paquets depuis un réseau étendu, et un système de divertissement domestique, qui comprend une pluralité de modules de génération de signal multimédia (110 à 140), les signaux à commutation de paquets contenant des ordres de commande pour le fonctionnement du système de divertissement domestique, le procédé comprenant les étapes consistant à :
- capter, par le microphone (161), un signal de bruit d'un environnement dans lequel est situé le système de divertissement domestique,
- évaluer, par le module de traitement de bruit (160), le signal de bruit capté par le microphone, dans lequel, lorsqu'un événement de signal de bruit prédéfini est détecté dans le signal de bruit, de la puissance est fournie par le module de commande de puissance à l'au moins un de la pluralité de modules de génération de signal multimédia en réponse à l'événement de signal de bruit prédéfini détecté, et un signal multimédia de présence est émis par l'au moins un de la pluralité de modules de génération de signal multimédia en réponse à l'événement de signal de bruit prédéfini détecté, dans lequel de la puissance est fournie par le module de commande de puissance à l'au moins un de la pluralité de modules de génération de signal multimédia et retirée de l'au moins un module de génération de signal multimédia en conformité avec les ordres de commande reçus, dans lequel les ordres de commande indiquent celui de l'au moins un de la pluralité de modules de génération de signal multimédia qui doit émettre le signal multimédia de présence.

11. Procédé selon la revendication 10, comprenant en outre les étapes consistant à :
- détecter une entrée d'un moment de démarrage auquel l'au moins un de la pluralité de modules de génération de signal multimédia (110 à 140) est fourni en puissance,
- fournir la puissance à l'au moins un de la pluralité de modules de génération de signal multimédia (110 à 140) au moment indiqué par le minuteur, et
- émettre le signal multimédia de présence au moment indiqué par le minuteur.

12. Procédé selon la revendication 11, comprenant en outre les étapes consistant à :
- détecter une entrée d'un moment de mise hors tension auquel l'au moins un de la pluralité de modules de génération de signal multimédia doit arrêter d'émettre le signal multimédia de présence, et
- retirer automatiquement la puissance de l'au moins un module de génération de signal multimédia après le moment de mise hors tension.

13. Procédé selon l'une quelconque des revendications 10 à 12, dans lequel le module de traitement de bruit (160) fonctionne dans un mode de fonctionnement en veille dans lequel le module de traitement de bruit n'est pas conçu pour évaluer le signal de bruit, dans lequel il est surveillé si un signal de réveil est détecté, dans lequel, lorsque le signal de réveil est détecté, le mode de fonctionnement du module de traitement de bruit passe dans un mode de fonctionnement dans lequel le signal de bruit est évalué afin de déterminer si l'événement de bruit prédéfini est présent dans le signal de bruit.
